**Europäisches Patentamt**

**European Patent Office**

**Office européen des brevets**

(19)

(11) Publication number: **0 033 127**
**B1**

(12)

# EUROPEAN PATENT SPECIFICATION

(45) Date of publication of the patent specification:
**20.07.83**

(51) Int. Cl.³: **B 23 K 9/10**

(21) Application number: **81100409.2**

(22) Date of filing: **21.01.81**

(54) Center tracking welder unit with floating reference.

(30) Priority: **24.01.80 US 114828**

(43) Date of publication of application:
**05.08.81 Bulletin 81/31**

(45) Publication of the grant of the patent:
**20.07.83 Bulletin 83/29**

(84) Designated Contracting States:
**DE FR GB IT NL**

(56) References cited:
**DE-A-2 925 068**
**GB-A-1 517 481**
**US-A-3 975 616**
**US-A-4 158 124**

(73) Proprietor: **Crutcher Resources Corporation, 50 Briar Hollow Lane, Houston Texas 77027 (US)**

(72) Inventor: **Connell, Talbert Duane, 18102 Vintage Wood Lane, Spring Texas 77379 (US)**

(74) Representative: **UEXKÜLL & STOLBERG Patentanwälte, Beselerstrasse 4, D-2000 Hamburg 52 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Center tracking welder unit with floating reference

The invention relates to a method of controlling movement of a welding torch device along a weld line in consumable electrode-type arc welding where the welding torch is to weave along the weld line and wherein the weld current is integrated and compared against a reference for reversing the weaving direction when the integral of the weld current reaches a predetermined relation with respect to the reference.

In such prior method described in US-A No. 4158124, the welding arc is caused to weave back and forth across a gap to be filled with weld metal. The arc current is integrated during each traverse across the gap and the integral of the current is compared with a fixed reference so that, as the wall of the gap is approached on a given traverse, the direction of travel of the arc will be reversed within a predetermined proximity of the side wall. As the arc then moves back in the other direction across the gap, the arc current is again integrated and the direction of travel reversed as the arc reaches proximity of the other wall.

When carrying out such method, the tip of the consumable electrode periodically, at a rate of about 100 Hz, makes contact with the molten pool which results in a rapid increase of flow of current. As the total current is integrated in the prior method, the integral obtained is not always reliable or repeatable.

It is an object of the invention to provide for a more accurate control of the reversal of direction of the weld arc.

Such object is solved by improving a method of the aforementioned type by generating a floating reference voltage in response to the frequency components of less than approximately 3 Hz of said weld current and reversing the direction of travel of the torch when said integral bears said predetermined relation to said floating reference.

In the method according to the invention, a floating reference is used rather than a fixed reference for comparison to the integrated arc current. The use of the floating reference ensures a more accurate control of the reversal of direction of the weld arc since the spikes of current occasioned by contact between the welding tip and the molten pool in the dip transfer are eliminated and, therefore, only the low frequency components of the weld current used. By utilizing the average current of the weld arc in generating the floating reference without contribution of the current flowing when the welding tip is randomly in contact with the molten pool, the arc is more likely to stop at the same point in its path, before reversal, than in the prior method using the fixed reference.

In a start-up phase of the method according to the invention, the integration product may be compared with a fixed reference voltage. The floating reference voltage is then generated and, in response to such floating reference voltage, comparison of the integrated product is transferred from the fixed reference to the floating reference value.

The invention also relates to an apparatus for controlling movement of a welding torch device along a weld line in consumable electrode-type arc welding, where a welding torch weaves along the weld line, and including means for integrating and comparing the weld current against a reference such that the weaving direction is reversed when the integral of the weld current reaches a predetermined relation with respect to the reference, which apparatus is characterized by floating reference means generating a floating reference voltage in response to the frequency components of less than approximately 3 Hz of said weld current such that said weaving direction is reversed when said integral bears said predetermined relation to said floating reference.

The invention will be described in the following with reference to an embodiment shown in the drawings, wherein:

fig. 1 is a schematic diagram illustrating the generating of a floating point reference of the present invention for the system shown in US-A No. 4158124, and

fig. 2 is a schematic diagram illustrating the use of the present floating point reference in the system of US-A No. 4158124.

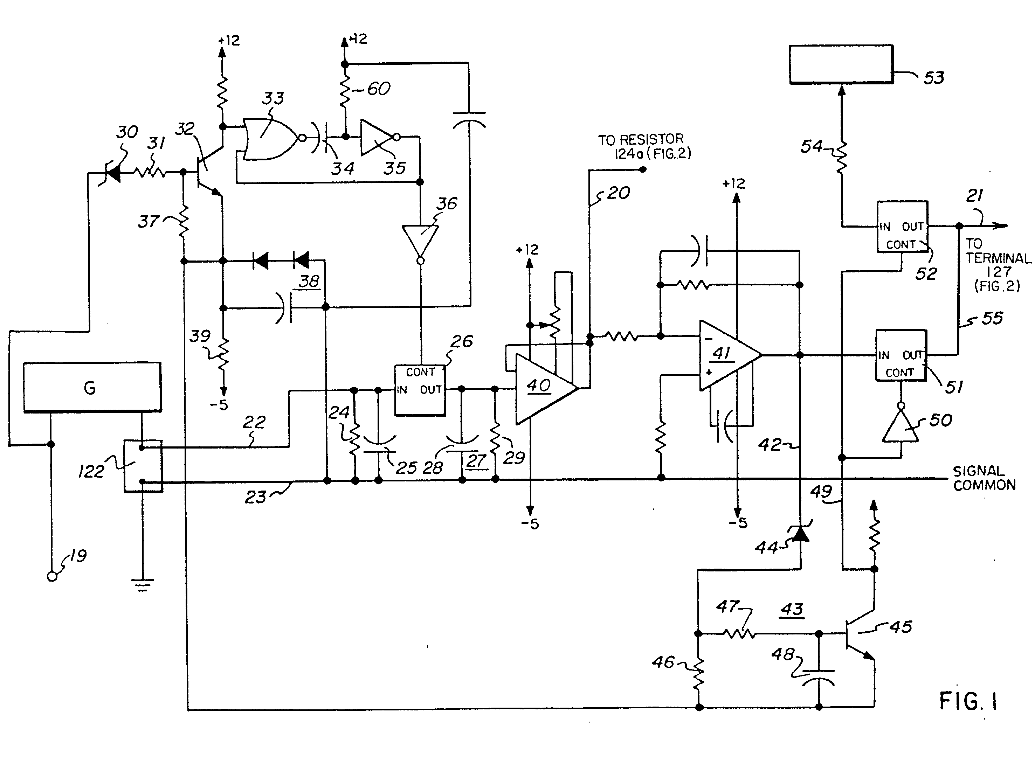

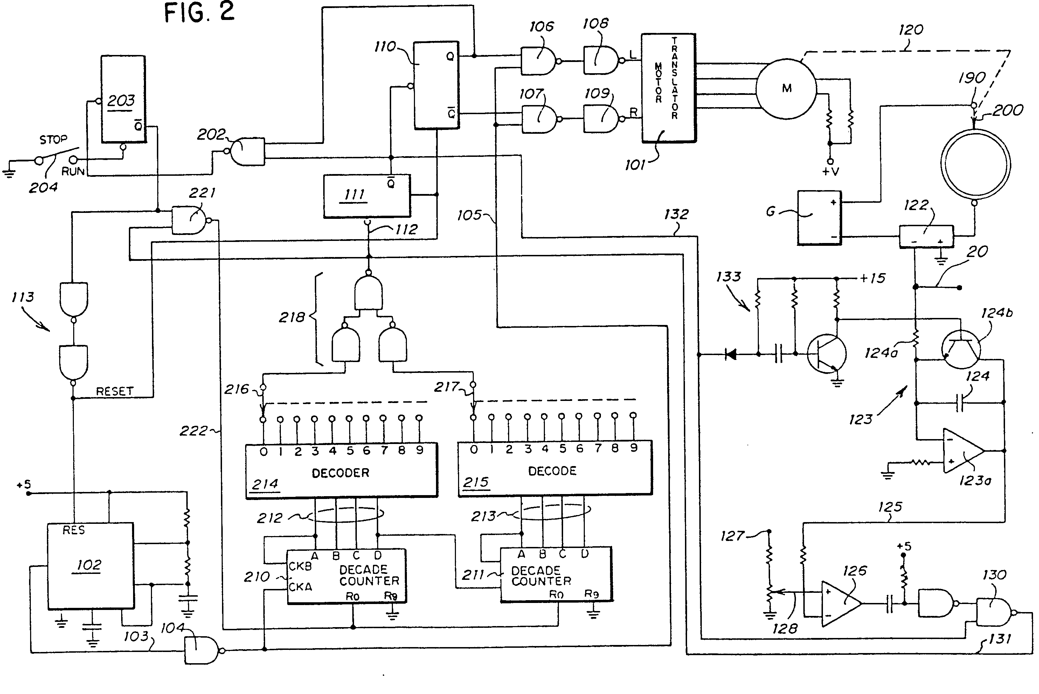

Fig. 1 illustrates, in circuit diagram form, a system for the generation and utilization of a floating point reference to be applied in the system shown in fig. 2. Generally, in these figures, generator G is connected to terminal 19 which represents the arc. Shunt 122 is connected at one terminal to generator G and at the other terminal to weld ground, and thus the weld current flows through the shunt 122.

In accordance with the present invention, the voltage across shunt 122, which varies in dependence upon the magnitude of the weld current, is utilized to supply a signal on line 20 (fig. 1), which leads to integrator 123 (fig. 2) and to supply on line 21 (fig. 1) either a fixed reference or a floating reference which is applied to terminal 127 of comparator 126 (fig. 2). In generating the signal applied to the integrator by way of line 20, provision is made for avoidance of the effects of the phenomenon known as the dip transfer.

Referring now in detail to fig. 1 hereof, lines 22 and 23 are connected by way of a filter comprising of resistor 24 and capacitor 25 to a sample-and-hold circuit 27 which comprises switch 26, capacitor 28, resistor 29 and buffer amplifier 40. It will be noted that line 23 is at ground or a common reference point. The switch 26 is operated in such a manner that the weld current input is applied to capacitor 28 when there is no dip transfer. More particularly, and characteristic of consumable arc welding, the tip of the consumable electrode periodically, at a rate, for example, of about 100 Hz, makes contact with the molten pool, thus placing an abrupt repeated or periodic load on generator G. Normally, generator G will produce an arc voltage of the order of 15 to 28 V. However, when there is a contact of the welding wire with the molten batch, the added load causes the voltage at the terminal 19 to decrease to a lower voltage, for example, to around 3 to 5 V. Switch 26 is operated as to be conductive only when the welding tip is not in contact with the molten pool.

The dip transfer effects are eliminated by supplying a voltage from generator G through Zener diode 30 and resistor 31 to the input of a transistor 32. The collector of transistor 32 is connected by way of NOR gate 33, capacitor 34, inverter 35 and inverter 36 to the control input of switch 26. The circuit involving transistor 32 renders switch 26 conductive so long as the arc voltage is above a threshold level, for example, above 10 to 15 V. Switch 26 is rendered non-conductive when the voltage at the electrode drops below said threshold. The emitter circuit of transistor 32 includes resistor 37 connected to the base, the circuit 38 leading to reference line 23 and resistor 39 leading to a supply terminal.

The circuit comprising NOR gate 33, resistor 60, capacitor 34 and inverter 35 serves to delay rendering switch 26 conductive following recovery of the voltage from generator G to its high level. This avoids the effects of the current build-up, which might otherwise affect the integration voltage if switch 26 were rendered conductive immediately upon change in the voltage level of generator G.

The output of buffer amplifier 40 is a function of the weld current minus the excursions caused by dip transfer, and is applied by way of line 20 to the integrator system 123 (fig. 2), more particularly through resistor 124a. The output voltage from buffer amplifier 40 is also applied to a filter amplifier 41, providing filtering having a highfrequency cut-off, for example at about 3 Hz, and providing amplification of the signal level by a factor, for example of about 200. The output of filter amplifier 41 is a function of weld current minus dip transfer mode components and high frequency components and comprises the low frequency components of the weld current.

The output of filter amplifier 41 is applied by way of conductor 42 to a transfer switch circuit 43 comprised of a Zener diode 44 and a transistor 45 having in its base circuit a resistor 46 connected between Zener diode 44 and resistor 37. Resistor 47 is connected between Zener diode 44 and resistor 37. Resistor 47 is connected between Zener diode 44 and resistor 46 to the base of transistor 45. Capacitor 48 is connected between the base and the emitter of transistor 45. The collector of transistor 45 is connected by way of line 49 and through inverter 50 to the control input of a switch 51, and is connected directly, without inversion, to the control input of a second switch 52. A fixed reference source 53 is connected by way of resistor 54 to the input of switch 52.

The output of filter amplifier 41 is connected to the input of switch 51. The output of filter amplifier 41 represents a filtered average of the weld current during such time as the voltage from generator G is at its high level, which, because of the operation of switch 26, is rendered free from the effect of operation of the welding unit in the dip transfer mode.

The output of switch 51 is connected by way of conductor 55 to the line 21 which leads to the level control for the integrator. More particularly, line 21 is connected to terminal 127 (fig. 2). By means of switches 51 and 52, the operation of the system is automatically switched from the start-up condition where the fixed reference from source 53 is effective (switch 52 conductive and switch 51 non-conductive) to the run condition with the floating reference from filter amplifier 41 effective (switch 51 conductive and switch 52 non-conductive). Once the system is started up and the conductivity of transistor 45 is switched by reason of a build-up of a voltage across the capacitor 48, then during the remainder of the operation switch 51 is conductive and switch 52 is non-conductive.

Referring now to fig. 2, a stepping motor M is shown diagrammatically and is connected to a motor translator 101 so as to be selectively energized thereby for rotation in either clockwise or counter-clockwise directions.

Motor M is coupled through gears represented by linkage 120 and to the welding head 190 and functions to step rapidly to move the nozzle 200 laterally in the welding groove between confronting ends of two abutting pipe sections to be welded together.

Motor M is rotationally stepped at a preferred rate of about 350-400 steps/s, as determined by the frequency of a pulse train applied to the inputs, L or R, of motor translator 101. Motor translator 101 serves to apply proper excitation to motor M.

Pulses applied to translator 101 are derived from a clock generator 102. The output line 103 from clock generator 102 is connected to a line 105 by a NAND gate 104 used as an inverter. Pulses on line 105 are applied to one input of NAND gates 106 and 107. The outputs of NAND gates 106 and 107 are connected to inverters 108 and 109, respectively. The inverter outputs are coupled to the inputs of motor translator unit 101. Pulses appearing on the output of inverter 108 drive motor M left, or counter-clockwise. Pulses appearing at the output of inverter 109 drive motor M to the right, or clockwise.

The passage of pulses through NAND gates 106 and 107 is controlled by the state of J-K flip-flop 110, which alternately enables NAND gates 106 and 107. Flip-flop 110 is clocked by a negative going transition at the $\overline{Q}$ output of J-K flip-flop 111. Both flip-flops 110 and 111 are reset by a logic 0 on the CLR input line provided from buffer 113. Flip-flop 111 is clocked to change state by a negative going transition on its clock input line 112.

The direction that motor M rotates is abruptly changed in dependence upon certain defined characteristics of the current through the welding tip. Welding nozzle 200 is illustrated diagrammatically as being coupled by linkage 120 to motor M. Rotation of motor M is translated through linkage 120 and appropriate gearing to oscillate nozzle 200 back and forth across the weld zone between the pipe ends.

It is desired that the position of the nozzle 200 relative to the side walls of the groove be a predetermined distance from the side wall on both ends of each traverse across the groove. Welding current is directly sensed by connections to generator G through shunt element 122. A variable voltage, representative of highly variable welding current, is developed across shunt element 122 and is applied to an integrator circuit 123. Integrator circuit 123 comprises an operational amplifier 123a, a feedback and a resistor 124a which receives the output of buffer amplifier 40 (fig. 1) via signal line 20. A transistor 124b is part of a reset circuit. The voltage due to charge accumulating on capacitor 124 in the integrator circuit 123 is applied over line 125 to comparator 126.

A first input of comparator 126 receives the integrated signal. The second input of comparator 126 is connected to switch 52 (fig. 1) via signal line 21 to terminal 127 through a potentiometer 128, the wiper of which is connected to the second comparator unit.

As the arc from nozzle 200 traverses the weld groove, capacitor 124 is charged. When the output voltage from integrator circuit 123 exceeds the floating reference voltage on the wiper of potentiometer 128, the output from comparator 126 changes state, causing a transition from a high state to a low state at the output of NAND gate 130.

The output of NAND gate 130 is applied over line 131 to the clock input 112 of flip-flop 111. Every other clocking of flip-flop 111 results in the clocking of flip-flop 110 and a change of state of that device. With each change of state, the direction of the stepping motor M is changed, with the nozzle 200 being driven in the opposite direction across the groove.

The $\bar{Q}$ output of flip-flop 111 is also applied over line 132 to a reset circuit 133. Thus, concurrently with alternating changes of state of flip-flop 111, the capacitor 124 is discharged through transistor 124b, and a new charging cycle takes place. The integrator accumulates charge until the voltage therein again exceeds the reference voltage, whereupon flip-flop 111 again toggles to clock flip-flop 110 and initiates a change in the direction of rotation of motor M with every other change of state of flip-flop 111.

It will be noted that the $\bar{Q}$ output of flip-flop 110 as well as line 132 are connected by way of NAND gate 202 to a reset flip-flop 203. The $\bar{Q}$ output of flip-flop 203 is then connected by way of NAND buffer 113 to reset flip-flops 110 and 111 and also resets clock generator 102.

The system shown in fig. 2 also includes means whereby the length of the traverse of the welding arc may be given a preset limit independently of integrator 123. This is accomplished by applying the output of the clock generator 102 through NAND gate 104 to the inputs for decade counters 210 and 211. Counters 210 and 211 are connected in series. The outputs are connected by way of lines 212 and 213 to decoders 214 and 215, respectively. The outputs of decoders 214 and 215 are provided with selector switches 216 and 217, respectively. Thus, any selected number of pulses up to a total of 99 can be utilized to limit the number of steps the motor M may take in a given half of a traverse before a pulse from AND circuit 218 is applied to line 112 to toggle flip-flop 111 on each pulse and flip-flop 110 on every other pulse.

In operation, if the arc at nozzle 200 is to be moved by motor M no more than 50 steps in any one-half traverse, then switch 216 is set at zero and switch 217 is set at the number 5 output. With the switches so set, if the integral of the welding current does not cause reversal of motor M by the time the motor M has taken 100 steps, then the outputs of the decoders 214 and 215, through AND circuit 218, would cause flip-flop 110 to toggle and reverse motor M.

The flip-flop 203 is toggled one way to start system operation and the other way to stop. The $\bar{Q}$ output of flip-flop 203 is applied through buffer 113 in order to reset clock generator 102 and to reset flip-flops 110 and 111, and through gate 221 in order to reset decade counters 210 and 211.

Assume start up and run with the welding tip 200 located adjacent one edge of the groove and with flip-flop 110 set to run motor M to drive the arc towards the opposite edge of the groove. Closure of switch 204 initiates operation of the clock generator 102, thus starting the motor M to drive the arc towards the opposite edge of the groove. When the integrator voltage exceeds the floating reference voltage on comparator 126, the motor direction is reversed to run the tip back across the groove, thus beginning the arc reciprocation under control of the integrator-comparator.

At count set in switches 216 and 217, the arc will be about one half the traverse across the groove, and flip-flop 111 will be toggled. The motor continues to drive the arc without change of direction across the groove towards the other edge. Motor M will thereafter reverse direction upon the first to occur of (i) the integrator output exceeding the floating reference voltage, or (ii) the output of decoders enabling the lines selected by the setting of switches 216 and 217.

It will be understood that, although the above description relates primarily to the welding of adjacent ends of pipe or similar cylindrical hollow work members together, as in the building of pipelines where the pipes cannot be rotated, the invention is not limited to such design or use. It may be used for welding together adjacent ends of pipes which are rotated, the welding device *per se* being essentially stationary. The invention also may be used for joining together the edges of flat metal plates, or flanges of angle members, structural beams, and the like, whether the welding equipment is moved along the joints, or the welding equipment is held stationary and the work moved past it, or even where both the work and the welding equipment are moved.

Having described in detail the preferred embodiment of the method and apparatus of the present invention, the same being illustrated in the accompanying drawings, it will be evident to one of ordinary skill in the art that various modifications and applications are possible within the scope and spirit of the invention and such modifications and applications are incorporated herein by reference and in the appended claims.

## Claims

1. Method of controlling movement of a welding torch device along a weld line in consumable electrode-type arc welding where the welding torch is to weave along the weld line and wherein the weld current is integrated and compared against a reference for reversing the weaving direction when the integral of the weld current reaches a predetermined relation with respect to the reference, characterized by generating a floating reference voltage in response to the frequency components of less than approximately 3 Hz of said weld current and reversing the direction of travel of the torch when said integral bears said predetermined relation to said floating reference voltage.

2. Method according to claim 1, characterized in that in a start-up phase, the integration product is compared with a fixed reference voltage, that said floating reference voltage is generated and that in response to said floating reference voltage comparison of the integrated product is transferred from said fixed reference to said floating reference value.

3. Apparatus for controlling movement of a welding torch device along a weld line in consumable electrode-type arc welding, where a welding torch weaves (200) along the weld line, and including means (123) for integrating and comparing the weld current against a reference such that the weaving direction is reversed when the integral of the weld current reaches a predetermined relation with respect to the reference, characterized by floating reference means (41) generating a floating reference voltage in response to the frequency components of less than approximately 3 Hz of said weld current such that said weaving direction is reversed when said integral bears said predetermined relation to said floating reference.

4. Apparatus according to claim 3, characterized by interruption means (26) eliminating dip transfer mode components from said weld current prior to said integration.

5. Apparatus according to claim 4, characterized in that the output of said interruption means (26) is delivered to said integrating means (123) and also to said floating reference means (41), such that the output of said floating reference means (41) is a function of weld current minus dip transfer mode components and frequency components higher than 3 Hz.

6. Apparatus according to one of claims 3 to 5, characterized by transfer switch means (43, 51, 52) responsive to a given level of said floating reference voltage following start-up to transfer the comparison of said integral from a fixed reference voltage to said floating reference voltage.

7. Apparatus according to claim 6, characterized in that said transfer switch means (43, 51, 52) comprise sensor switch means (43) responsive to said given level of said floating reference voltage and a pair of gate switches (51, 52) alternately gated to conduction by said sensor switch means (43), the input of one of said gate switches (51, 52) being connected to the source (53) of said fixed reference voltage and the input of the other of said gate switches (51, 52) being connected to the output of said floating reference means (41), the outputs of said gate switches (51, 52) being connected to said comparing means (126).

## Revendications

1. Procédé pour commander le déplacement d'un chalumeau de soudure le long d'une ligne de soudage dans un système de soudage à arc du type à électrode fusible, dans lequel le chalumeau doit être déplacé avec un mouvement d'oscillation le long de la ligne de soudure et dans lequel le courant de soudage est intégré et comparé à une référence pour l'inversion du sens d'oscillation lorsque l'intégrale du courant de soudage atteint une relation prédéterminée par rapport à la référence, caractérisé par la production d'une tension de référence flottante en réponse aux composantes de fréquence d'une valeur inférieure à environ 3 Hz dudit courant de soudage et par l'inversion du sens de déplacement du chalumeau lorsque ladite intégrale prend ladite relation prédéterminée par rapport à ladite tension de référence flottante.

2. Procédé selon la revendication 1, caractérisé en ce que, dans une phase de démarrage, le produit d'intégration est comparé à une tension de référence fixe, en ce que ladite tension de référence flottante est produite et en ce que, en réponse à ladite tension de référence flottante, la comparaison du produit intégré est transférée de ladite référence fixe à ladite valeur de référence flottante.

3. Appareil pour commander le déplacement d'un chalumeau de soudage le long d'une ligne de soudure dans un système de soudage à arc du type à électrode fusible, dans lequel un chalumeau de soudage (200) oscille le long de la ligne de soudure, et comprenant des moyens (123) pour intégrer et comparer le courant de soudage à une référence de telle sorte que le sens d'oscillation est inversé lorsque l'intégrale du courant de soudage atteint une relation prédéterminée par rapport à la référence, caractérisé par des moyens à référence flottante (41) produisant une tension de référence flottante, en réponse aux composantes de fréquence inférieures approximativement à 3 Hz dudit courant de soudage, de sorte que ledit sens d'oscillation est inversé lorsque ladite intégrale prend ladite relation déterminée par rapport à ladite référence flottante.

4. Appareil selon la revendication 3, caractérisé par des moyens d'interruption (26) éliminant par immersion les composantes du mode de transition dudit courant de soudage, avant ladite intégration.

5. Appareil selon la revendication 4, caractérisé en ce que la sortie desdits moyens d'interruption (26) est délivrée auxdits moyens d'intégration (123), et également auxdits moyens à référence flottante (41), de telle sorte que la sortie desdits moyens à référence flottante (41) est une fonction du courant de soudage, moins les composantes de mode de transition par immersion et les composantes de fréquence supérieures à 3 Hz.

6. Appareil selon l'une des revendications 3 à 5, caractérisé par des moyens de commutation de transfert (43, 51, 52) répondant à un niveau donné de ladite tension de référence flottante, à la suite du démarrage, pour transférer la comparaison de ladite intégrale d'une tension de référence fixe à ladite tension de référence flottante.

7. Appareil selon la revendication 6, caractérisé en ce que lesdits moyens de commutation de transfert (43, 51, 52) comprennent des moyens commutateurs de détection (43), répondant audit niveau donné de ladite tension de référence flottante, et deux commutateurs de commande (51, 52) placés en alternance à l'état conducteur par lesdits moyens commutateurs de détection (43), l'entrée de l'un desdits commutateurs de commande (51, 52) étant raccordée à la source (53) de ladite tension de référence fixe et l'entrée de l'autre desdits commutateurs de commande (51, 52) étant raccordée à la sortie desdits moyens à référence flottante (41), les sorties desdits commutateurs de commande (51, 52) étant raccordées auxdits moyens comparateurs (126).

## Patentansprüche

1. Verfahren zur Steuerung der Bewegung einer Schweisseinrichtung für das Lichtbogenschweissen mit sich verbrauchender Elektrode entlang einer Schweissbahn, wobei die Schweisselektrode entlang der Schweissbahn pendelt und wobei der Schweissstrom integriert und mit einer Bezugsgrösse verglichen wird, um die Pendelrichtung umzukehren, wenn das Integral des Schweissstromes eine vorbestimmte Beziehung zur Bezugsgrösse erreicht, gekennzeichnet durch die Erzeugung einer gleitenden Bezugsspannung in Abhängigkeit von den Frequenzanteilen des Schweissstroms mit weniger als etwa 3 Hz und durch die Umkehr der Bewegungsrichtung der Elektrode bei Erreichen der vorbestimmten Beziehung des Integrals zur gleitenden Bezugsspannung.

2. Verfahren nach Anspruch 1, dadurch gekennzeichnet, dass in einer Anlaufphase das Integrationsergebnis mit einer festen Bezugsspannung verglichen wird, dass die gleitende Bezugsspannung erzeugt wird und dass in Abhängigkeit vom Vergleich der gleitenden Bezugsspannung mit dem Integrationsergebnis von dem festen Bezugswert auf den gleitenden Bezugswert übergegangen wird.

3. Anordnung zur Steuerung einer Schweisseinrichtung für das Lichtbogenschweissen mit sich verbrauchender Elektrode entlang einer Schweissbahn, wobei eine Schweisselektrode (200) entlang der Schweissbahn pendelt und wobei eine Einrichtung (123) zum Integrieren und Vergleichen des Schweissstroms mit einer Bezugsgrösse vorgesehen ist, so dass die Pendelrichtung umgekehrt wird, wenn das Integral des Schweissstroms eine vorbestimmte Beziehung zur Bezugsgrösse erreicht, gekennzeichnet durch eine Gleitbezugseinrichtung (41) zur Erzeugung einer gleitenden Bezugsspannung in Abhängigkeit von den Frequenzanteilen des Schweissstroms mit weniger als etwa 3 Hz, so dass die Pendelrichtung umgekehrt wird, wenn das Integral die vorbestimmte Beziehung zur gleitenden Bezugsgrösse erreicht.

4. Anordnung nach Anspruch 3, gekennzeichnet durch eine Unterbrechereinrichtung (26) zur Beseitigung der Bestandteile des Tauchübergangsvorgangs aus dem Schweissstrom vor der Integration.

5. Anordnung nach Anspruch 4, dadurch gekennzeichnet, dass das Ausgangssignal der Unterbrechereinrichtung (26) der Integrationseinrichtung (123) sowie auch der Gleitbezugseinrichtung (41) zugeführt wird, so dass das Ausgangssignal der Gleitbezugseinrichtung (41) eine Funktion des Schweissstroms abzüglich der Bestandteile des Tauchübergangszustandes und der Frequenzbestandteile mit mehr als 3 Hz ist.

6. Anordnung nach einem der Ansprüche 3 bis 5, gekennzeichnet durch eine Übergangsschalteinrichtung (43, 51, 52), die in Abhängigkeit eines vorgegebenen Wertes der gleitenden Bezugsspannung nach der Anlaufphase vom Vergleich des Integrals mit der festen Bezugsspannung auf den Vergleich mit der gleitenden Bezugsspannung umschaltet.

7. Anordnung nach Anspruch 6, dadurch gekennzeichnet, dass die Übergangsschalteinrichtung (43, 51, 52) eine in Abhängigkeit vom vorgegebenen Wert der gleitenden Bezugsspannung wirksame Sensorschalteinrichtung (43) sowie ein Paar Gatterschalter (51, 52) zur wahlweisen Leitendmachung der Sensorschalteinrichtung (43) aufweist, wobei der Eingang eines der Gatterschalter (51, 52) mit der Quelle (53) für die feste Bezugsspannung und der Eingang des anderen Gatterschalters (51, 52) mit dem Ausgang der Gleitbezugseinrichtung (41) sowie die Ausgänge der Gatterschalter (51, 52) mit der Vergleichereinrichtung (126) verbunden sind.

FIG. I

0 033 127

FIG. 2

0 033 127